# EUROPEAN PATENT APPLICATION

(11) **EP 3 944 759 A1**
(43) Date of publication of application: **02.02.2022**
(21) Application number: 20188166.1
(22) Date of filing: 28.07.2020
(51) Int. Cl.: A01G 31/06, A01G 31/04

(54) **AUTOMATIC VERTICAL FARMING SYSTEM AND METHOD FOR GROWING PLANTS IN A SOILLESS GROWING ENVIRONMENT**

(71) Applicant: InFarm - Indoor Urban Farming GmbH, 12099 Berlin (DE)
(72) Inventor: Deshpande, Rohit, 12099 Berlin (DE)
(74) Representative: adares Patent- und Rechtsanwälte Reininger & Partner GmbB

(57) **Abstract**

The invention relates to an automatic vertical farming system comprising:
- vertical supports (4) adapted to accommodate a plurality of tray-receptacles (3) in a vertically stacked arrangement showing a plurality of tray-positions, the plurality of tray-receptacles (3) each being adapted for farming plants in a soilless growing environment, wherein the vertical supports (4) provide at least one tray-position being an irrigation station for the tray-receptacles (3) and
- a tray-receptacle transport device (5) arranged and adapted to move the tray-receptacles (3) along the vertical supports (4) between different tray-positions,
characterized in that,
the at least one plant irrigation station comprises
• an irrigation device (1) adapted to deliver a liquid into a tray-receptacle (3) being accommodated in the irrigation station,
and
• in addition to the tray-receptacle transport device (5) a tray manipulator (2) arranged and adapted to manipulate the spatial orientation of the tray-receptacle (3) being accommodated in the irrigation station by a movement of the tray-receptacle (3) such that the liquid in the accommodated tray-receptacle (3) is accelerated by gravity and/or the movement caused by the tray manipulator (2) towards an edge section of the tray-receptacle (3). Further, the present invention relates to a method for growing plants in a soilless growing environment using the automatic vertical farming system.

## Description

The present invention relates to an automatic vertical farming system and a method for growing plants in a soilless growing environment. Especially, the present invention relates to an automatic vertical farming system of hydroponic, aeroponic or aquaponic in particular hydroponic type. Furthermore, the present invention relates to a method for growing plants in a soilless growing environment using the automatic vertical farming system.

A structurally similar automatic vertical farming system is known from WO 2019/030606 A1. The known system comprises vertical supports adapted to accommodate a plurality of tray-receptacles in a vertically stacked arrangement showing a plurality of tray-positions. The plurality of tray-receptacles each being adapted for farming plants in a soilless growing environment, wherein the vertical supports provide at least one tray-position being an irrigation station for the tray-receptacles. Furthermore, the automatic vertical farming system comprises a tray-receptacle transport device arranged and adapted to move the tray-receptacles along the vertical supports between different tray-positions. This prior art documents describes logistic aspects of tray-receptacle handling in detail. However, there remains a need for improved plant irrigation in such an automated system.

It is an object of the present invention to provide an automatic vertical farming system and a method for growing plants in a soilless growing environment which lead to a better and faster growing of plants.

According to the present invention, the at least one plant irrigation station comprises
- an irrigation device adapted to deliver a liquid into a tray-receptacle being accommodated in the irrigation station, and
- in addition to the tray-receptacle transport device a tray manipulator arranged and adapted to manipulate the spatial orientation of the tray-receptacle being accommodated in the irrigation station by a movement of the tray-receptacle such that the liquid in the accommodated tray-receptacle is accelerated by gravity and/or the movement caused by the tray manipulator towards an edge section of the tray-receptacle.

The irrigation station is designed to provide the principle of Ebb and Flow during irrigation of the tray-receptacle accommodated in the irrigation station. The tray-receptacle accommodated in the irrigation station can be filled in part with a liquid which is manipulated by the tray manipulator to flow to and ebb from predetermined tray areas. The tray-receptacle is at least in its bottom area hole-free and orifice-free and holds the liquid within its inside so that by the Ebb and Flow principle no liquid loss in the tray-receptacle is incurred. This Ebb and Flow principle is simple, reliable during operation and has low initial investment cost. The liquid especially in the form of a hydroponic or nutrient solution alternately floods predetermined areas of the tray-receptacle and is allowed to ebb away from them. The Ebb and Flow principle utilizes the fact that the liquid within the tray-receptacle is not left in constant contact with the roots of plants.

The tray-receptacles of this system are moved around between different positions being vertically stacked. By means of the irrigation station as a centralized point within the automatic vertical farming system the tray-receptacles can be irrigated according to a predefined or to a dynamic irrigation schedule. This allows an optimized plant growth. The controllable and variable Ebb and Flow irrigation system leads to an increased speed of plant growth and to optimizing efficiency during duty cycles.

Furthermore, the ratio of tray-receptacle positions to required plumbing is reduced drastically since the irrigation station can service multiple tray-receptacles. This reduces costs dramatically. Preferably, the tray-receptacle transport device acts as an automatic lift. The irrigation station can deliver different nutrient recipes to different tray-receptacles, if the automatic vertical farming system comprises a water conditioning system having a corresponding capability. The liquid delivered in the irrigation station to the tray-receptacle accommodated in the irrigation station can be water and/or a nutrient solution.

The automatic vertical farming system is easy to maintain and install. It provides for a more precise control on exposure of plants to nutrient and/or water and easier maintenance of the irrigation station, in particular with vertical farming where access to equipment in upward areas is difficult. The liquid could also be mixed with sanitizing agents and can be run through the tray with/ without plants helping against bacterial slime, scale buildup and algae.

The movement caused by the tray manipulator may be any combination of rotational and/or translational trajectories providing the effect that the liquid in the accommodated tray-receptacle is accelerated by gravity and/or by the movement caused by the tray manipulator towards an edge section of the tray-receptacle.

The edge-sections of the tray-receptacle extend along the circumference of the tray-receptacle. Depending on the shape of the tray-receptacle the edge-sections may be arranged in a rectangular or an oval or circular shape.

The tray receptacles are each being adapted for farming plants in a soilless growing environment. They are designed as a growing bed to allow a plant growth starting from seeds, crops, seedlings and/or plants. An optimal root irrigation can be produced by alternately actuating the tray manipulators. This will cause an elastic deformation of the tray-receptacle.

Preferably, the tray manipulator is arranged and adapted to perform a rotational movement and/or to perform a translational movement to the tray-receptacle such that the liquid in the accommodated tray-receptacle is accelerated towards a section of the circumference of the tray-receptacle. By doing so, the Ebb & Flow movement is realized.

For example, the tray manipulator is arranged and adapted to perform a vertical movement of one side or one edge of the tray-receptacle. According to a preferred embodiment the tray manipulator is arranged and adapted to perform a tilt of the tray-receptacle around a tilting axis at an angle of 1 to 10°, preferably 3 to 8°. Preferably, the tilting axis is arranged horizontally or mainly horizontally. Such an angle is sufficient to realize the Ebb & Flow principle.

Preferably, the irrigation device comprises at least one injection device adapted to deliver the liquid into the tray-receptacle being accommodated in the irrigation station. The injection device usually provides a combination of pipe sections and nozzle sections. Preferably, the injection device is an arrangement of plumbing components designed to evenly and equally distribute liquids such as water and/or water based nutrient solution to the tray-receptacle at the highest speed without creating unnecessary splashing. It can be made from PVC (polyvinylchloride). Preferably, the injection device comprises a duct section and one or more nozzle sections arranged on the duct section. Therefore, the duct section serves for feeding the liquid to the end sections being structured as a pipe or as a nozzle.

In a preferred embodiment the irrigation device comprises at least one extraction device adapted to extract the liquid at least partially from the accommodated tray-receptacle. Preferably, the extraction device comprises at its end section a nozzle section designed to best extract liquid from the tray-receptacle in an efficient manner. Preferably, the extraction nozzle is connected to a positive displacement pump that is creating negative pressure in order to extract liquid contained in the tray-receptacle in order to remove the liquid such as water or a nutrient solution from the tray-receptacle.

Preferably, the extraction device comprises a nozzle section and a pipe section. The nozzle section can be segmented. The pipe section serves as collecting pipe for the liquid received by the nozzle sections. Preferably, the extraction device has pedestals. Thereby, the extraction device can physically contact the bottom of the tray-receptacle during the extraction but a contact of the nozzle section with the tray-receptacle accommodated in the irrigation station is avoided. Thereby, a suction of the extraction nozzle sections on the tray-receptacle's bottom area is prevented. For example, the extraction device has a length in the range of 200 to 400 mm and a width in the range of 30 to 50 mm, when seen in a perpendicular view onto the tray-receptacle accommodated in the irrigation station. An inner pipe diameter of the pipe section is, e.g., in the range of 20 to 40 mm. The pedestals protrude from the nozzle section, i.e. have a height, e.g., in the range of 2 to 4 mm. The nozzle section may comprise two segments separated by a middle section of 10 to 20 mm.

Preferably, the injection device and the extraction device are arranged collinearly along an irrigation axis. In a preferred embodiment the injection device and/or the extraction device show a shape that is extended along the irrigation axis.

Preferably, the injection device and the extraction device are connected via one pipe. Thus, liquid can be fed via the pipe to the injection device which can fill the liquid into the tray-receptacle accommodated in the irrigation station and the liquid can be removed from the tray-receptacle after a predetermined time period by the extraction device and fed via the same pipe to a container serving as a liquid reservoir. Pipe components, and thus costs, can be saved by using one pipe for both feeding and removing the liquid from the tray-receptacle accommodated in the irrigation station.

Preferably, the irrigation device comprises a liquid sensor, in particular an ultrasonic liquid level sensor, adapted to sense a liquid level in the tray-receptacle being accommodated in the irrigation station. The liquid sensor can be cone liquid level sensor designed to give live feedback to the liquid level in the tray-receptacle. As liquid sensors any known liquid sensors can be used.

In a preferred embodiment the irrigation device comprises an irrigation beam structure and the injection device, the extraction device, wherein the extraction device and the liquid sensor are mounted collinearly along the irrigation axis to the irrigation beam structure. Preferably, the irrigation beam structure is designed as a vertically actuated horizontal beam that moves in accordance with the arrival and departure of tray-receptacles to the irrigation station. Preferably, the function of the irrigation beam structure is to lower the injection device, the extraction device and/or the liquid sensor into the tray-receptacle when it is arranged in the irrigation station and to remove it or them before the tray-receptacle is removed from the irrigation station in order to prevent collision. Position and direction specifications refer to the operating position of the automatic vertical farming system.

Preferably, the automatic vertical farming system further comprises an automatically controlled irrigation device movement mechanism adapted to move the irrigation device vertically such that it is moved into the tray-receptacle after arrival of it in the irrigation station but is removed when the tray-receptacle is intended to be removed from the irrigation station. After arrival of the tray-receptacle the injection of a liquid is performed automatically as well as the following movement of the tray manipulator in order to force the liquid to move in the direction of an edge section of the tray-receptacle. During and after this forced displacement of the liquid the liquid is removed fully or largely from the tray-receptacle by the extraction device.

Preferably, the automatic vertical farming system further comprises a positive displacement pump connected to the extraction device and creating negative pressure to extract the liquid from the tray-receptacle accommodated in the plant irrigation station.

Due to the fact that the automatic vertical farming system is designed such that the tray-receptacles are periodically transported to and situated in the irrigation station, this gives rise to the opportunity to arrange further highly priced and/or less frequently needed technological devices in a defined location of the vertically stacked positions. For example, such systems comprise monitoring camera systems and/or other plant growth related sensors.

In a preferred embodiment further tray position of the vertical supports are adapted to be plant irradiation stations to irradiate plants and/or seeds arranged on tray-receptacles with predetermined wavelengths of light. Preferably, the irradiation stations each comprise a lighting device having a plurality of LED (light emitting diode) lamps emitting plant sensitive emission wavelength ranges and having separately adjustable emission intensities. Plant sensitive emission wavelength ranges are preferably blue, green, orange, yellow, red, infrared and / or ultraviolet wavelength ranges. For example, UV-B light can be applied upon demand to a specific tray-receptacle accommodated in an UV-B light irradiation station and apply a specific amount during daily intervals. In addition to irradiation stations there may also be so-called dark stations providing periodical darkness to the plants in order to provide an optimized environment.

Preferably, the automatic vertical farming system further comprises at least one camera and/or at least one control sensor device each adapted for an analysis of the plants farmed in the plurality of the tray-receptacles. The control sensor device can be adapted to detect parameters from the group consisting of temperature inside and outside said tray-receptacle, pH-value of the liquid, and/or a plant fertilizer concentration of the liquid.

Further, the present invention relates to a method for growing plants in a soilless growing environment, comprising the following steps:
a) providing an automatic vertical farming system according to one or more of the embodiments described above,
b) moving a tray-receptacle containing plants and/or seeds to the irrigation station so that the tray-receptacle is accommodated in the irrigation station,
c) injecting liquid into the tray-receptacle accommodated in the irrigation station for a predetermined time period,
d) after expiration of the predetermined time period, sitting idle the tray-receptacle for a further predetermined time period,
e) after expiration of the further predetermined time period, extracting the liquid from the receptacle accommodated in the irrigation station,
f) manipulating the spatial orientation of the tray-receptacle by the tray manipulator by a movement of the tray-receptacle such that the liquid in the accommodated tray receptacle is accelerated towards the extraction nozzle at least temporarily during extraction of the liquid from the tray-receptacle,
g) sensing a liquid level in the tray-receptacle accommodated in the irrigation station during extraction of the liquid from the tray-receptacle,
h) if a predetermined liquid level is sensed in the tray-receptacle, stopping extraction of liquid from the tray-receptacle, and
i) after stopping extraction of the liquid from the tray-receptacle, moving the tray-receptacle away from the irrigation station to a different tray-position in the vertical supports of the farming system

Embodiments and advantages described for the automatic vertical farming system apply accordingly to the method and vice versa.

Preferably, step c) is performed by starting a pump, e.g., a positive displacement pump. Steps c and d) can be replaced by following step c') injecting liquid into the tray-receptacle accommodated in the irrigation station and step d') sensing a liquid level in the tray-receptacle accommodated in the irrigation station, and when a further predetermined liquid level in the tray-receptacle accommodated in the irrigation station is sensed, stopping the injection of liquid in the tray-receptacle, and sitting idle the tray-receptacle for a further predetermined time period.

Preferably, the method comprises a further step of lowering and/or moving an injection device, an extraction device and/or a liquid sensor into the tray-receptacle accommodated in the irrigation region before step c) and/or e) and to move away the injection device, the extraction device and/or the liquid sensor from the tray-receptacle accommodated in the irrigation region the after step i).

In the following an embodiment of the invention is described in detail referring to the figures. The figures show schematically
Fig. 1 a perspective view of an automatic vertical farming system according to the invention;
Fig. 2 a perspective view of a tray-receptacle situated in an irrigation station;
Fig. 3 a perspective view of one of the irrigation devices as shown in Fig. 1 and 2;
Fig. 4 a side view of the irrigation device as shown in Fig. 3;
Fig. 5 a perspective view of the extraction device as shown in Fig. 3;
Fig. 6 a top view of the extraction device as shown in Fig. 5;
Fig. 7 a side view of the extraction device as shown in Fig. 5;
Fig. 8 a sectional view of the extraction device as shown in Fig. 5, seen in the direction marked with arrows VIII-VII in Fig.7;
Fig. 9 a perspective view of the injection device as shown in Fig. 3;
Fig. 10 a top view of the injection device as shown in Fig. 9;
Fig. 11 a side view of the injection device as shown in Fig. 9;
Fig. 12 a partial view on the injection device as shown in Fig. 9, seen in the direction marked with arrows XII-XII in Fig. 10 and sectioned along dot-dashed line XII-XII in Fig. 10;
Fig. 13 another side view of the injection device as shown in Fig. 9; and
Fig. 14 a sectional view of a tray-receptacle situated in an irrigation station as shown in a perspective in Fig. 2.

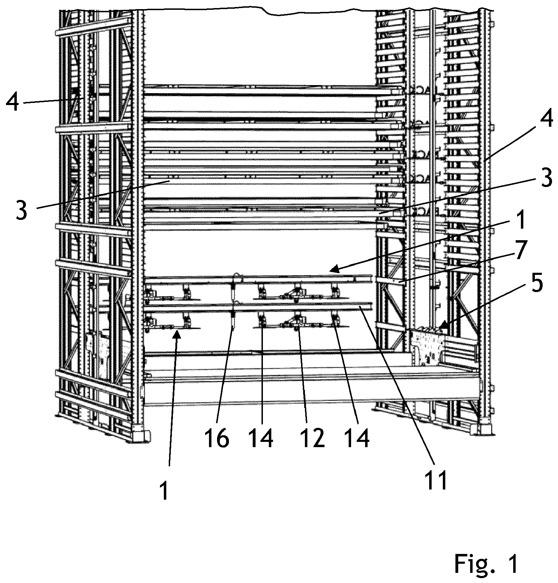

Fig. 1 shows a perspective view of an automatic vertical farming system according to the invention. The automatic vertical farming system comprises several vertical supports 4 adapted by several horizontal bars 7 to accommodate a plurality of tray-receptacles 3 in a vertically stacked shelf-like arrangement providing a plurality of tray-positions. The tray-receptacles 3 are each adapted for farming plants in a soilless growing environment. The automatic vertical farming system comprises further a tray-receptacle transport device 5 arranged and adapted to move the tray-receptacles 3 along the vertical supports 4 between different tray-positions. The vertical supports 4 provide at least one tray-position serving as an irrigation station for the tray-receptacles 3. Each irrigation station comprises an irrigation device 1 adapted to deliver a liquid into a tray-receptacle 3 being accommodated in the irrigation station, which is not shown in Fig. 1 for sake of clarity. In addition to the tray-receptacle transport device 5 the automatic vertical farming system comprises a tray manipulator 2 arranged and adapted to manipulate the spatial orientation of the tray-receptacle 3 being accommodated in the irrigation station by a movement of the tray-receptacle 3 such that the liquid in the accommodated tray-receptacle 3 is accelerated by gravity and/or the movement caused by the tray manipulator 2 towards an edge section of the tray-receptacle. The tray manipulator 2 is not shown in Fig. 1. It will be shown and described in more detail in the following figures.

Each irrigation device 1 comprises an injection device 12, two extraction devices 14, a liquid sensor 16, and an irrigation beam structure 11, wherein the injection device 12, both extraction devices 14 and the liquid sensor 16 are mounted collinearly to the irrigation beam structure 11.

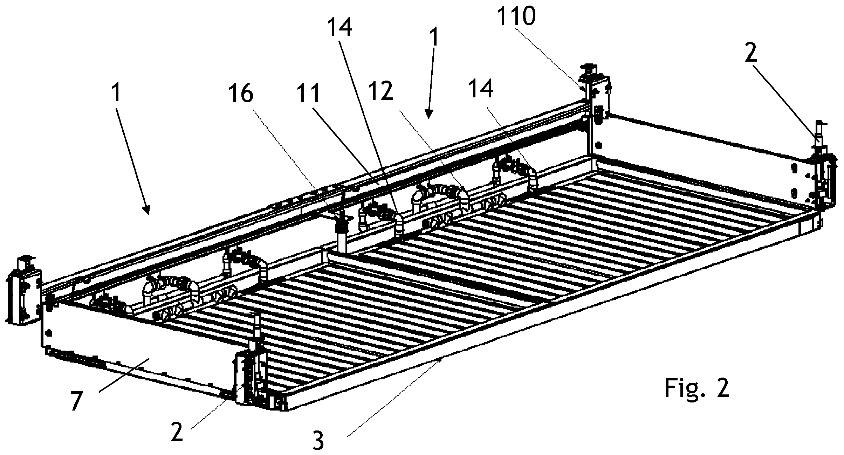

Fig. 2 shows a perspective view of a tray-receptacle 3 situated in an irrigation station.
The tray-receptacle 3 is arranged in the irrigation station comprising two irrigation devices 1. The injection devices 12 are adapted to deliver the liquid into the tray-receptacle 3 being accommodated in the irrigation station. The extraction devices 14 are adapted to extract the liquid at least largely from the accommodated tray-receptacle 3, and the liquid sensor 16 is adapted to sense a liquid level in the tray-receptacle 3 being accommodated in the irrigation station. To the horizontal bars 7 tray manipulators 2 are mounted. The tray manipulators 2 are each arranged and adapted to manipulate the spatial orientation of the tray-receptacle 3 being accommodated in the irrigation station by a movement of the tray-receptacle 3 such that the liquid in the accommodated tray-receptacle 3 is accelerated by gravity and/or the movement caused by the tray manipulator 2 towards an edge section of the tray-receptacle 3. In this embodiment the tray manipulators 2 lift the tray-receptacle 3 at opposite corners of the same longitudinal edge of the tray-receptacle such that a rotational movement of the tray-receptacle 3 along its longitudinal axis is achieved. Thereby, gravity is accelerating the liquid being in the tray-receptacle 3 into the direction of both irrigation devices 1 that are situated along the longitudinal edge and axis of the tray-receptacle 3. The tray manipulators 2 are each arranged and adapted to perform a tilt of the tray-receptacle 3 at an angle of 1 to 10°. On each of the irrigation beam structures 11 an irrigation device movement device 110 is arranged. It is adapted to move the injection device 12, both extraction devices 14 and the liquid sensor 16 of the irrigation devices 1 into the direction of the tray-receptacle 3 and away from it, as desired before or after the tray-receptacle 3 is situated in the irrigation station. The injection device 12, both extraction devices 14 and the liquid sensor 16 of the irrigation devices 1 are all mounted to the same irrigation beam structure 11. Thereby, the irrigation device movement device 110 creates the movement of all the devices comprised by the irrigation devices 1 by moving the irrigation beam structure 11.

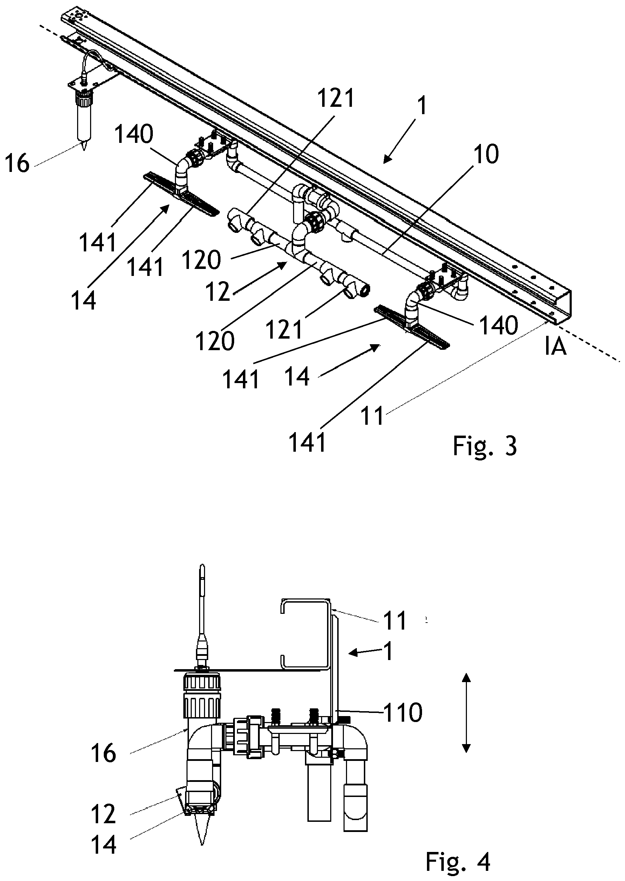

Fig. 3 shows a perspective view of one of the irrigation devices 1 as shown in Fig. 1 and Fig. 2. The irrigation device 1 comprises the irrigation beam structure 11, one injection device 12, two extraction devices 14 and one liquid sensor 16. The injection device 12 and the extraction device 14 both show a structure that is being extended along an irrigation axis IA. The injection device 12, the extraction devices 14 and the liquid sensor 16 are arranged collinearly along the irrigation axis IA. The irrigation device movement device 110 is shown dismounted from the irrigation beam structure 11 in Fig. 3 for sake of clarity. Each extraction device 14 has two nozzle sections 141 arranged on both sides of a pipe section 140. The injection device 12 comprises a duct sections 120 and nozzle sections 121. The injection device 12 and the extraction devices 14 are each connected to a common tubing 10. This connection is further realized via valves not shown in Fig. 3. Those valves control the mode of injecting a liquid via the injection device 12 to the tray-receptacle 3 and the mode of extracting a liquid from the tray-receptacle 3 via the extraction devices 14.

Fig. 4 shows a side view of the irrigation device 1 as shown in Fig. 3. The irrigation device movement device 110 is able to move the irrigation device 1 with its irrigation beam structure 11, its injection device 12, their extraction devices 14 and its liquid sensor 16 in the vertical directions as shown by the arrow, i.e. in vertical up and down directions.

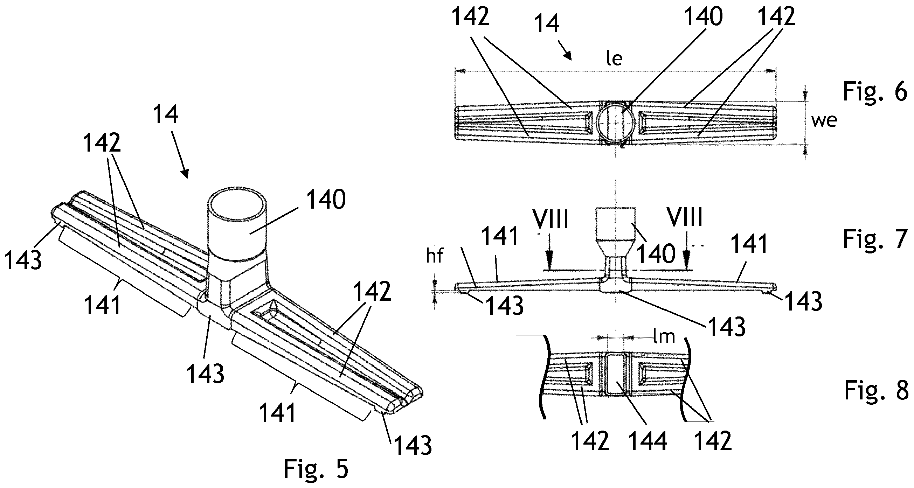

Fig. 5 shows a perspective view of the extraction device 14 as shown in Fig. 3. The extraction device 14 comprises two nozzle sections 141 which are arranged on both sides of a pipe section 140. Each nozzle section 141 comprises two extraction ducts 142 having the shape of enlongated channels with their openings arranged on the bottom side of the nozzle sections 141. In the upward direction those extraction ducts 142 are closed. At the bottom of each end sections both nozzle sections 141 comprise a pedestal 143. A further pedestal 143 is formed at the bottom of the tube section 140. The purpose of these pedestals 143 is described in more detail with reference to Fig. 7.

Fig. 6 shows a top view of the extraction device 14 as shown in Fig. 5. The extraction device 14 with two extraction ducts 142 on both sides of the pipe section 140 through which liquid contained in a tray-receptacle (not shown) can be extracted by activation of a pump (not shown) being in operative connection with the pipe section 140. This preferred embodiment of the extraction device 14 has a length le consisting of both nozzle 141 sections and the pipe section 140 of 300 mm and a maximum width we of 40 mm.

Fig. 7 shows a side view of the extraction device as shown in Fig. 5. The extraction device's 14 pedestals 143 having a height hf of 2,5 mm above the level of the bottom side openings of the extraction ducts 142 in both nozzle sections 141. Therefore, when arranged in a tray-receptacle (not shown) the extraction device 14 can be placed onto the bottom plane of the tray-receptacle 3 by touching it only with the pedestals 143. If the tray-receptacles contain a liquid, this liquid is sucked through the small slits between the pedestals into the extraction ducts 142 and out of the tray via the pipe section 140.

Fig. 8 shows a partial top view of the extraction device, sectioned along line VIII-VIII in Fig. 7. On both side of the middle section 144 two extraction ducts 142 are extending. The middle section 144 having length lm of 15 mm separates a pair of extraction ducts 142 having an identical structure.

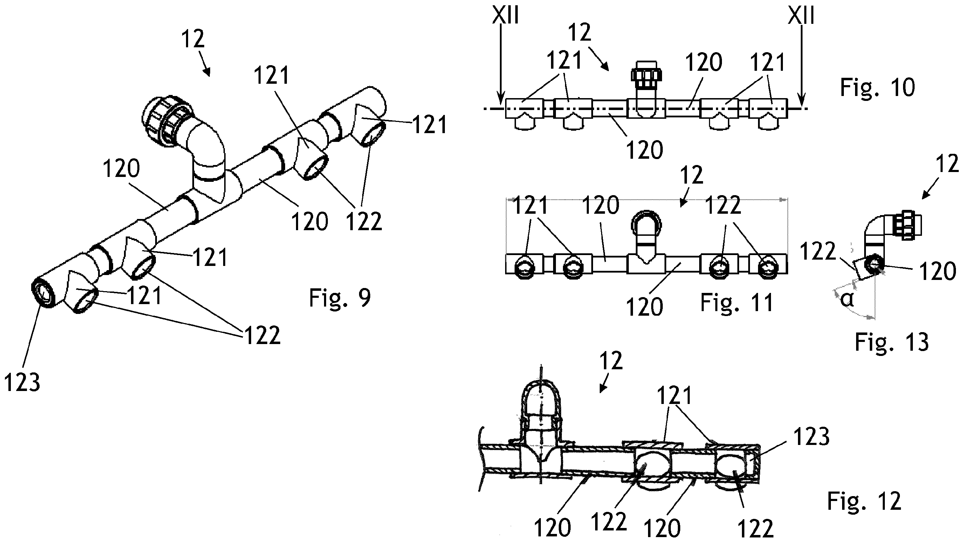

Fig. 9 shows a perspective view of the injection device as shown in Fig. 3. The injection device 12 comprises on both sides of a middle pipe section several duct sections 120 and several nozzle sections 121. Each nozzle section 121 is attached to a duct section 120 and each nozzle section 121 provides a nozzle orifice 122 in the shape of a pipe's end section.

Fig. 10 shows a top view of the injection device as shown in Fig 9. All duct sections 120 and all nozzle sections 121 are collinearly arranged to provide a slim elongated design.

Fig. 11 shows a side view of the injection device 12 as shown in Fig 9. The nozzle orifices 122 are tilted around an imaginary horizontal axis along the duct sections 120 and the nozzle sections 121 and have an inner diameter of e.g. 32 mm.

Fig. 12 shows a partial view of the injection device as shown in Fig 10, sectioned along line XII-XII. Each of the pipe shaped duct sections 120 has end sections onto which a nozzle section 121 having a nozzle orifice 122 are arranged. The inner diameter of the duct sections 120 is preferably 20 mm. For providing a cost-effective construction all duct sections 120 and nozzle sections 121 are provided by standard tube fittings for sanitary installation use. Preferably, both end sections of the injection device 12 are closed with standard tube fitting sealing plugs 123.

Fig. 13 shows another side view of the injection device as shown in Fig 9. An angle α of 70° is chosen between the spatial orientation of nozzle orifice 122 and an axis perpendicular to the bottom of a tray-receptacle accommodated in the irrigation station (not shown).

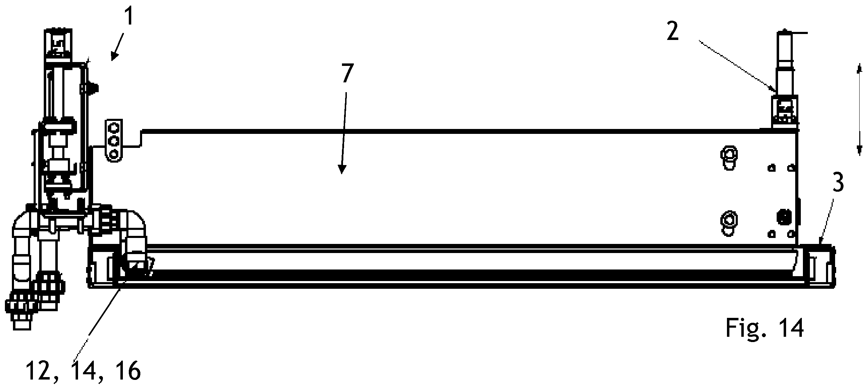

Fig. 14 shows a sectional view of a tray-receptacle 3 being situated with an irrigation station 1 that protrudes in the direction of the tray-receptacle's bottom. This has been shown in a perspective view in Fig. 2. The tray manipulators 2 are adapted to perform a movement to the tray-receptacle 3 such that the liquid in the accommodated tray-receptacle 3 is accelerated towards a section of the circumference of the tray-receptacle 3. The direction of the movement of the tray manipulator 2 is indicated by the arrow. It is a vertical movement leading to a rotation of the tray-receptacle 3 around an axis being perpendicular to the section plane of this section view. Since only one side of the tray-receptacle 3 is moved vertically, the tray-receptacle 3 is tilted such that the liquid (not shown) in the accommodated tray-receptacle 3 is accelerated by gravity and the movement caused by the tray manipulator 2 towards the left edge section of the tray-receptacle 3.

### Reference numeral list:

- α: angle
- hf: height of pedestal
- le: length of extraction nozzle
- lm: length of middle section
- we: width extraction nozzle
- IA: irrigation axis
- 1: irrigation device
- 11: irrigation beam structure
- 110: irrigation device movement device
- 12: injection device
- 120: duct section
- 121: nozzle section
- 122: nozzle orifice
- 123: sealing plug
- 14: extraction device
- 140: pipe section
- 141: nozzle section
- 142: duct system
- 143: pedestal
- 144: middle section
- 16: liquid sensor
- 2: tray manipulator
- 3: tray-receptacle
- 4: support
- 5: tray-receptacle transport device
- 7: bar
- 10: tubing

## Claims

1. An automatic vertical farming system comprising:
- vertical supports (4) adapted to accommodate a plurality of tray-receptacles (3) in a vertically stacked arrangement showing a plurality of tray-positions, the plurality of tray-receptacles (3) each being adapted for farming plants in a soilless growing environment, wherein the vertical supports (4) provide at least one tray-position being an irrigation station for the tray-receptacles (3) and
- a tray-receptacle transport device (5) arranged and adapted to move the tray-receptacles (3) along the vertical supports (4) between different tray-positions,
**characterized in that**,
the at least one plant irrigation station comprises
• an irrigation device (1) adapted to deliver a liquid into a tray-receptacle (3) being accommodated in the irrigation station, and
• in addition to the tray-receptacle transport device (5) a tray manipulator (2) arranged and adapted to manipulate the spatial orientation of the tray-receptacle (3) being accommodated in the irrigation station by a movement of the tray-receptacle (3) such that the liquid in the accommodated tray-receptacle (3) is accelerated by gravity and/or the movement caused by the tray manipulator (2) towards an edge section of the tray-receptacle (3).

2. The automatic vertical farming system according to claim 1, **characterized in that** the tray manipulator (2) is arranged and adapted to perform a rotational movement and/or to perform a translational movement to the tray-receptacle (3) such that the liquid in the accommodated tray-receptacle (3) is accelerated towards a section of the circumference of the tray-receptacle (3).

3. The automatic vertical farming system according to claim 1 or 2, **characterized in that** the tray manipulator (2) is arranged and adapted to perform a tilt of the tray-receptacle (3) around a tilting axis at an angle of 1 to 10°, preferably 3 to 8°.

4. The automatic vertical farming system according to one of the preceding claims, **characterized in that** the irrigation device (1) comprises at least one injection device (12) adapted to deliver the liquid into the tray-receptacle (3) being accommodated in the irrigation station.

5. The automatic vertical farming system according to claim 4, **characterized in that** the irrigation device (1) comprises at least one extraction device (14) adapted to extract the liquid at least partially from the accommodated tray-receptacle (3).

6. The automatic vertical farming system according to claim 5, **characterized in that** the injection device (12) and the extraction device (14) are arranged collinearly along an irrigation axis (IA).

7. The automatic vertical farming system according to claim 6, **characterized in that** the injection device (12) and/or the extraction device (14) show a shape that is extended along the irrigation axis (IA).

8. The automatic vertical farming system according to claims 6 or 7, **characterized in that** the irrigation device (1) comprises a liquid sensor (16), in particular an ultrasonic liquid level sensor, adapted to sense a liquid level in the tray-receptacle (3) being accommodated in the irrigation station.

9. The automatic vertical farming system according to claims 8, **characterized in that** the irrigation device (1) comprises an irrigation beam structure (11) and the injection device (12), wherein the extraction device (14) and the liquid sensor (16) are mounted collinearly along the irrigation axis (IA) to the irrigation beam structure (11).

10. The automatic vertical farming system according to any of the previous claims, **characterized by** an automatically controlled irrigation device movement mechanism (110) adapted to move the irrigation device (1) vertically such that it reaches into the tray-receptacle (3) being arranged in the irrigation station.

11. The automatic vertical farming system according to any of the previous claims, **characterized by** a positive displacement pump connected to the extraction device (14) and creating negative pressure in order to extract the liquid from the
tray-receptacle (3) accommodated in the plant irrigation station.

12. The automatic vertical farming system according to any of the previous claims, **characterized in that** further tray position of the vertical supports (4) are adapted to be plant irradiation stations to irradiate plants and/or seeds arranged on
tray-receptacles (3) with predetermined wavelengths of light.

13. The automatic vertical farming system according to any of the previous claims, **characterized by** at least one camera and/or at least one control sensor device each adapted for an analysis of the plants farmed in the plurality of the tray-receptacles (3).

14. A method for growing plants in a soilless growing environment, comprising the following steps:
a) providing an automatic vertical farming system according to one of claims 3 to 13,
b) moving a tray-receptacle (3) containing plants and/or seeds to the irrigation station so that the tray-receptacle (3) is accommodated in the irrigation station,
c) injecting liquid into the tray-receptacle (3) accommodated in the irrigation station for a predetermined time period,
d) after expiration of the predetermined time period, sitting idle the tray-receptacle (3) for a further predetermined time period,
e) after expiration of the further predetermined time period, extracting the liquid from the receptacle (3) accommodated in the irrigation station by the extraction device (14),
f) manipulating the spatial orientation of the tray-receptacle (3) by the tray manipulator by a movement of the tray-receptacle such that the liquid in the accommodated tray receptacle is accelerated towards the extraction nozzle (14) at least temporarily during extraction of the liquid from the tray-receptacle (3),
g) sensing a liquid level in the tray-receptacle (3) accommodated in the irrigation station during extraction of the liquid from the tray-receptacle (3),
h) if a predetermined liquid level is sensed in the tray-receptacle (3), stopping extraction of liquid from the tray-receptacle (3), and
i) after stopping extraction of the liquid from the tray-receptacle (3), moving the tray-receptacle (3) away from the irrigation station to a different tray-position in the vertical supports (4) of the farming system.
